# DEMANDE DE BREVET EUROPEEN

(11) **EP 0 891 112 A1**
(43) Date de publication de la demande: **13.01.1999**
(21) Numéro de dépôt: 98401715.2
(22) Date de dépôt: 07.07.1998
(51) Int. Cl.: H04Q 7/32, H04M 1/02

(54) **Module fonctionnel auxiliaire pour téléphone portable et ensemble dudit module et dudit téléphone**

(30) Priorité: 09.07.1997 FR 9708720
(71) Demandeur: SAGEM SA, 75116 Paris (FR)
(72) Inventeur: Dumont, Denis, 95880 Enghien les Bains (FR)
(74) Mandataire: Bloch, Gérard

(57) **Abrégé**

Module fonctionnel auxiliaire (21), pour téléphone portable (1) à boîtier (2) et prise de service (14) standards, agencé pour être monté sur le boîtier (2) et être connecté à la prise de service (14) du téléphone portable (1), dans lequel il est prévu des moyens (25) agencés pour être reliés en coupure sur un circuit d'interface radio du téléphone portable (1).

L'invention s'applique bien aux téléphones portables de type GSM.

## Description

En téléphonie, l'émission et la réception d'informations par un téléphone portable, d'un réseau cellulaire, de type GSM par exemple, ou d'un réseau de proximité, s'effectue par voie hertzienne.

Les informations transmises par voie hertzienne et donc aérienne, à travers le réseau, sont exposées sans obstacle au piratage c'est-à-dire à une écoute illicite par un tiers.

Dans le domaine plus général des transmissions de données entre un émetteur et un récepteur, il est connu que la protection des transmissions peut être assurée par un chiffrement en émission et un déchiffrement en réception des données transmises.

Afin de sécuriser les transmissions d'informations entre deux téléphones portables, une solution consiste par conséquent à intégrer dans chacun des téléphones un module de sécurisation comprenant des moyens de chiffrement et de déchiffrement.

Cependant, l'incorporation d'un tel module de sécurisation dans le téléphone portable n'est pas souhaitable. En effet, elle augmente le coût et l'encombrement du téléphone et ne satisfait aux besoins que d'un nombre limité d'utilisateurs.

Un téléphone portable pourvu d'un module intégré de sécurisation serait donc un produit d'intérêt commercial limité pour un fabricant.

Certains téléphones portables comprennent un logement de réception de et des moyens spécifiques de connexion d'une carte PCMCIA de sécurisation.

Une telle solution évite certes l'incorporation du module mais oblige à modifier considérablement la forme et la structure du téléphone, par rapport à celles d'un téléphone portable usuel du commerce. En outre, la carte et le logement augmentent l'encombrement du téléphone.

L'invention tire donc son origine d'un problème visant à proposer en option, à l'utilisateur d'un téléphone portable usuel du commerce, une fonction de sécurisation de transmission, sans modifier de façon rédhibitoire le coût et l'encombrement du téléphone.

La demanderesse entend toutefois ne pas limiter la portée de sa demande à l'option de sécurisation de transmission, mais au contraire l'étendre à toute option fonctionnelle pouvant être ajoutée au téléphone portable.

Les téléphones portables usuels du commerce sont généralement pourvus d'une prise de service permettant de relier le téléphone, par liaison filaire, à un ordinateur, à un télécopieur et autres machines de bureau. Ainsi, le téléphone peut être pourvu momentanément de fonctions additionnelles apportées par la machine de bureau. Une telle solution présente cependant l'inconvénient de réduire considérablement l'autonomie de déplacement du téléphone portable et de nécessiter l'utilisation peu pratique d'une machine de bureau généralement encombrante.

L'invention propose de doter le téléphone portable usuel du commerce, standard, d'une option fonctionnelle, sans modification ni du coût, ni de l'encombrement du téléphone standard.

A cet effet, l'invention concerne un module fonctionnel auxiliaire, pour téléphone portable à boîtier et prise de service standards, agencé pour être monté sur le boîtier et être connecté à la prise de service du téléphone portable.

Grâce à cela, l'utilisateur peut ajouter, à la carte, une fonction additionnelle à son téléphone portable standard, simplement en montant ce module auxiliaire sur le boîtier standard du téléphone.

Avantageusement, il est prévu des moyens agencés pour être reliés en coupure sur un circuit d'interface radio du téléphone portable.

Avantageusement encore, il est prévu une prise de service standard pour montage gigogne.

Le module fonctionnel peut comprendre un berceau, de réception du téléphone portable, conformé pour une coopération desmodromique avec le boîtier du téléphone.

Dans une forme de réalisation particulière, il est prévu des moyens de chiffrement et de déchiffrement de données.

L'invention concerne aussi un ensemble comprenant un téléphone portable et au moins un module fonctionnel tel que celui présenté ci-dessus.

Avantageusement, le module auxiliaire reproduit, dans sa forme générale, la forme d'une partie d'extrémité du boîtier standard du téléphone.

L'invention sera mieux comprise à l'aide de la description suivante d'une forme particulière de réalisation du module fonctionnel auxiliaire pour téléphone portable et de l'ensemble comprenant le module et le téléphone de l'invention, en référence au dessin annexé sur lequel :
- la figure 1 représente un schéma bloc fonctionnel de deux ensembles selon la forme de réalisation particulière,

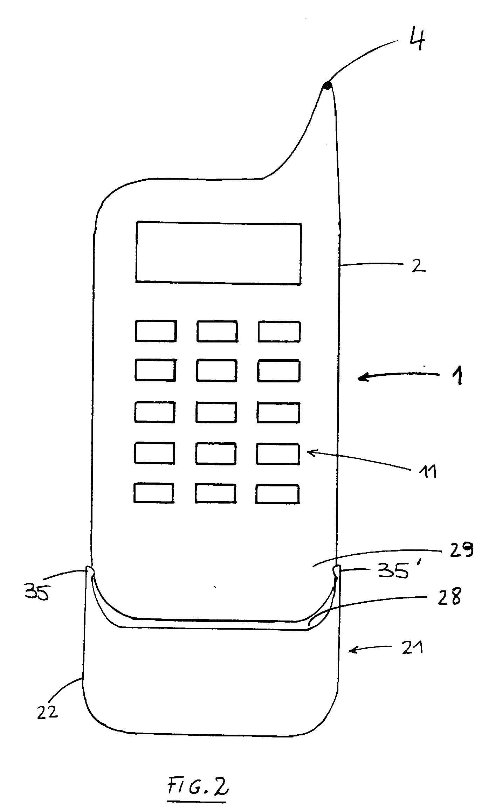

- la figure 2 représente une vue de face de l'un des ensembles de la figure 1 ; et
- la figure 3 représente un système de déconnexion d'antenne du module auxiliaire de l'un des ensembles de la figure 1.

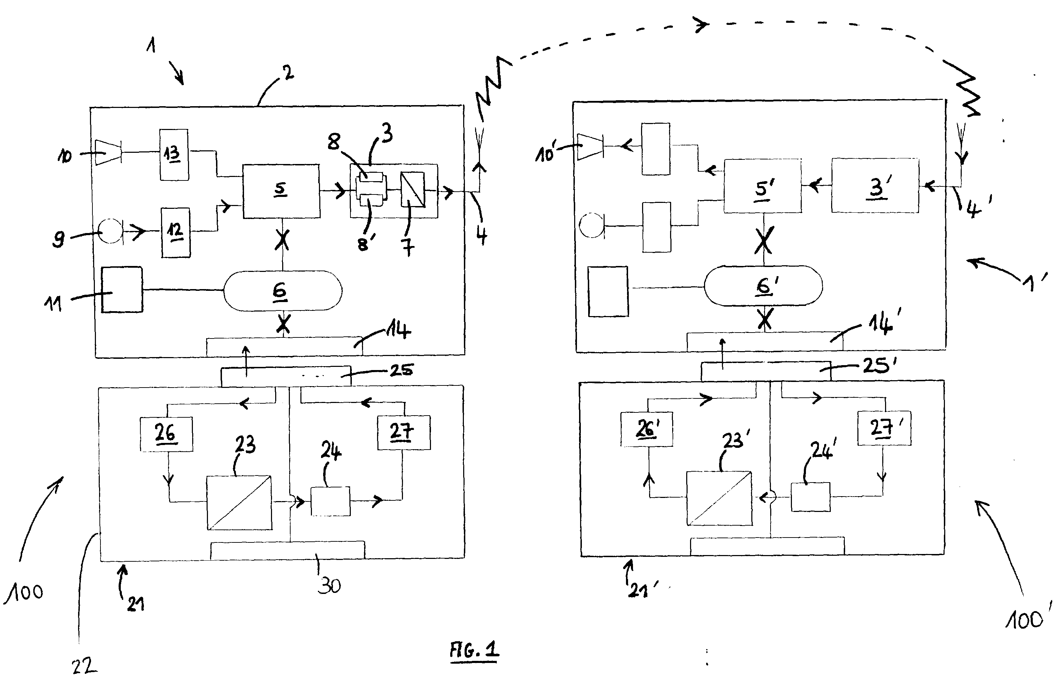

Les deux ensembles 100, 100' représentés sur la figure 1 sont identiques. Par souci de clarté, les éléments correspondants des deux ensembles 100, 100' portent les mêmes chiffres respectivement non primés et primés. L'un seul 100 de ces deux ensembles va maintenant être décrit.

L'ensemble 100 comprend un téléphone portable 1, ici d'un réseau cellulaire, et, en l'espèce, de type GSM, et un module auxiliaire de sécurisation de transmission 21 destiné à être monté sur et connecté au téléphone 1.

Le téléphone portable 1 est standard, autrement dit de type usuel du commerce. Il comprend, dans un boîtier standard 2, un bloc 3 d'émission et de réception radio pourvu d'une antenne radio 4, une interface téléphone/utilisateur, un bloc 5 de traitement de signal et un bloc 6 de contrôle du téléphone en l'espèce un microprocesseur.

Le bloc 3 d'émission et de réception radio comprend :
- un codec 7 destiné à décoder les signaux radio reçus via l'antenne radio 4, et à coder des signaux de parole numérisés en signaux radio à émettre ;
- un sous-bloc 8 de correction d'erreurs de transmission radio pour corriger les signaux radio reçus ;
- un sous-bloc 8' d'association d'un code de correction d'erreurs aux signaux de parole numérisés et destinés à être codés et émis par le bloc radio 3, afin de pré-corriger les signaux radio à émettre.

Le bloc 3 d'émission et de réception est connecté au bloc de traitement 5.

L'interface téléphone/utilisateur comprend un microphone 9, un haut-parleur 10 et des moyens de saisie pour entrer une commande, ici un clavier 11. Le microphone 9 et le haut-parleur 10 sont reliés au bloc de traitement 5, avec interposition d'un convertisseur analogique/numérique CAN 12 et d'un convertisseur numérique/analogique CNA 13, respectivement. Le clavier 11 est connecté au microprocesseur de contrôle 6.

Le bloc de traitement 5, relié au microprocesseur de contrôle 6, est destiné à traiter et ici filtrer et débruiter des signaux le traversant, et notamment les signaux de parole numérisés fournis par le convertisseur CAN 12 et les signaux radio reçus et décodés par le bloc radio 3.

Enfin, le téléphone 1 est pourvu d'une prise de service standard 14, ici femelle, connectée au bloc de contrôle 6, par laquelle le téléphone 1 peut être relié par liaison filaire à un ordinateur, un télécopieur et autres machines de bureau, et être connecté au module auxiliaire 21 comme cela sera explicité plus loin. La prise de service 14, accessible à un utilisateur, est montée à une extrémité 29 du téléphone portable.

Le module auxiliaire de sécurisation 21 est destiné à être monté et connecté au téléphone portable 1 afin d'apporter à celui-ci une fonction optionnelle de sécurisation de transmission.

Le module 21 comprend, dans un boîtier auxiliaire 22 :
- un bloc 23 de chiffrement et de déchiffrement de données pour chiffrer des signaux numérisés de parole à émettre et pour déchiffrer des signaux radio reçus, et
- un bloc de mise en forme 24, relié au bloc de chiffrement et de déchiffrement 23, destiné à mettre en forme les signaux de parole à émettre conformément à un protocole de communication, et à éliminer la mise en forme protocolaire des signaux radio reçus.

Le module fonctionnel auxiliaire 21 est en outre pourvu d'une prise mâle 25 de connexion à la prise de service femelle 14 du téléphone portable 1. La prise de connexion 25 du module auxiliaire 21 constitue une entrée/sortie de données provenant en entrée du téléphone 1 et alimentant en sortie le téléphone 1. Les données traversant ainsi le module de sécurisation 21 sont soit des signaux de parole numérisés délivrés par le convertisseur CAN 12 et destinés à être chiffrés, soit des signaux radio reçus par le bloc radio 3 et destinés à être déchiffrés. Le module 21 est ainsi agencé pour être relié en coupure sur le circuit d'interface radio du téléphone portable 1.

La prise 25 du module 21 est connectée d'une part au bloc de chiffrement et de déchiffrement 23 avec interposition d'un vocodeur 26 et, d'autre part, au bloc de mise en forme 24 avec interposition d'un adaptateur de débit 27 pour canal de transmission radio GSM.

Le vocodeur 26 et l'adaptateur de débit 27 pour canal de transmission radio GSM sont destinés à adapter les débits des données entrantes et sortantes, le débit de données dans le module 21, ici égal à 4800 bits/s, étant différent du débit de transmission GSM, et du débit de données des convertisseurs CAN 12 et CNA 13.

Le boîtier auxiliaire 22 du module 21 présente un berceau 28 de réception du téléphone portable 1, destiné à épouser la forme ici de l'extrémité 29 du boîtier standard pourvue de la prise de service 14, lors du coiffage du boîtier standard 2 par le boîtier auxiliaire 22. Le boîtier auxiliaire 22 est ainsi conformé pour une coopération mutuelle desmodronique avec le boîtier standard 2 du téléphone 1. La prise de connexion 25 du boîtier auxiliaire 21 s'étend au fond du berceau de réception 28.

Le boîtier auxiliaire 21 reproduit, dans sa forme générale, la forme de la partie d'extrémité 29 du boîtier standard 2 destinée à être coiffée par le boîtier auxiliaire 22.

Enfin, le module auxiliaire 21 est pourvu d'une prise de service 30, telle que celle 14 du téléphone 1, s'étendant à l'opposé du berceau 28 et reliée à la prise de connexion 25, pour un montage en gigogne d'une pluralité de modules fonctionnels destinés à apporter d'autres fonctions supplémentaires au téléphone.

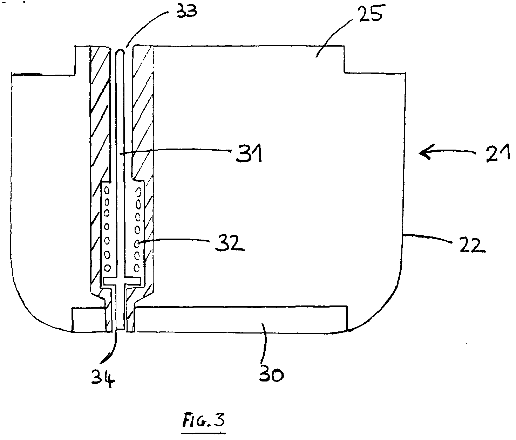

Le module de sécurisation 21 comprend en outre, en référence à la figure 3, un système à ressort de déconnexion destiné à déconnecter l'antenne radio 4 du téléphone 1 en cas de connexion d'une autre antenne dans la prise de service 30 du boîtier auxiliaire 21. Le système de déconnexion comprend une tige 31 s'étendant à l'intérieur du boîtier auxiliaire 22 entre la prise de connexion 25 et la prise de service 30. La tige 31 est maintenue au repos à l'intérieur du boîtier 22 sous l'action d'un ressort 32. Deux orifices 33, 34 de passage de la tige 31 et d'une âme de connecteur sont ménagés à travers la prise de connextion 25 et à travers la prise de service 30, respectivement. En outre, un autre orifice de passage de la tige 31 est ménagé dans la prise de service 14 du téléphone 1.

La tige 31 peut ainsi faire saillie de l'orifice 33 de la prise de connexion 25 sous la poussée de l'âme de connecteur reliée à une autre antenne et introduite dans l'orifice de passage 34, afin de déconnecter l'antenne radio 4 et de connecter l'autre antenne.

En outre, le boîtier auxiliaire 22 comporte des moyens de retenue au boîtier standard 2 du téléphone 1, ici deux clips 35, 35' montés sur deux extrémités libres du berceau 28.

Un utilisateur du téléphone 1 peut ainsi doter son téléphone 1 d'une fonction de sécurisation de transmission, en coiffant le téléphone 1 avec le module auxiliaire de sécurisation 21 recevant la partie d'extrémité 29 du téléphone 1 dans son berceau 28. Au cours du montage, le téléphone 1 et le module 21 se fixent l'un à l'autre à l'aide des clips de retenue 35, 35', et se connectent l'un à l'autre par connexion de la prise femelle de service 14 du téléphone 1 et de la prise mâle de connexion 25 du module 21.

La transmission sécurisée d'informations vocales entre les deux ensembles 100, 100', autrement dit entre les deux téléphones portables 1, 1' pourvus chacun d'un module de sécurisation 21, 21' va maintenant être décrite.

L'un des deux téléphones 1, jouant dans ce cas le rôle d'émetteur, saisit à l'aide de son microphone 9 des informations vocales de l'utilisateur destinées à être transmises à l'autre téléphone 1' faisant office de récepteur, via le réseau cellulaire.

Le convertisseur CAN 12 numérise le signal analogique de parole saisi par le microphone 9, en l'échantillonnant sur 13 bits à la fréquence de 8 kHz, et fournit au bloc de traitement 5 le signal de parole numérisé avec un débit de données de 104 kbits/seconde.

Le bloc de traitement 5 filtre le signal de parole numérisé afin de supprimer le bruit d'échantillonnage, et délivre le signal filtré à la prise de service 14, sous la commande du bloc de contrôle 6.

Le signal de parole numérisé et filtré entre alors dans le module de sécurisation 21 par la prise de connexion 25. Le débit de données du signal entrant est réduit par le vocodeur 26 pour passer de 104 kbits/seconde à 4800 bits/seconde.

Dans le module de sécurisation 21, le signal de parole numérisé est chiffré par le bloc de chiffrement et de déchiffrement 23 à l'aide d'une clé de chiffrement, puis mis en forme par le bloc de mise en forme 24 pour être conforme au protocole de communication.

Le débit du signal de parole numérisé, chiffré et mis en forme, est ensuite adapté pour être transmis à travers un canal de transmission GSM par l'adaptateur de débit 27.

Enfin, le signal de parole est renvoyé vers la prise de connexion 25 et la prise de service 14 avant d'être à nouveau pris en charge par le téléphone portable 1.

Sous la commande du microprocesseur 6 du téléphone portable 1, le signal de parole numérisé et chiffré est fourni au bloc radio 3 qui après association d'un code de correction d'erreurs par le sous-bloc 8' et codage par le codec 7 émet un signal radio correspondant au signal de parole numérisé, chiffré et codé, à l'aide de l'antenne radio 4, vers l'autre téléphone récepteur 1', via le réseau cellulaire.

Le signal radio émis par l'antenne radio 4 est reçu par l'antenne radio 4' du bloc radio 3' du téléphone récepteur 1'. Après décodage et correction d'erreurs par le bloc radio 3' et filtrage par le bloc de traitement 5', les informations transmises par le canal radio sont fournies, sous forme de données, au module de sécurisation 21' via la prise de service 14' et la prise de connexion 25'. Les informations entrant dans le module auxiliaire 21' sont codées par l'adaptateur de débit 27 qui diminue le débit de données à 4800 bits/seconde. Les informations transmises par le canal radio sont ensuite déchiffrées par le bloc de chiffrement et de déchiffrement 23', à l'aide de la clé de chiffrement. A la sortie du bloc de chiffrement et de déchiffrement 23', le débit de données est augmenté par le vocodeur 26' à 104 kbits/seconde.

Enfin, les informations décodées, déchiffrées et dévocodées sont renvoyées vers la prise de connexion 25' afin d'alimenter le téléphone portable 1'.

Dans le téléphone portable 1', sous la commande du microprocesseur 6', les informations décodées, déchiffrées et dévocodées sont transmises au convertisseur CNA 13' qui les transforment en un signal analogique de parole finalement émis par le haut-parleur 10'.

Dans la description qui vient d'être faite, le module auxiliaire apporte une fonction optionnelle de sécurisation au téléphone portable. Bien entendu, il ne s'agit là que d'un exemple particulier de fonction optionnelle ne devant en aucun cas être considéré de manière limitative.

## Revendications

1. Module fonctionnel auxiliaire (21), pour téléphone portable (1) à boîtier (2) et prise de service (14) standards, agencé pour être monté sur le boîtier (2) et être connecté à la prise de service (14) du téléphone portable (1).

2. Module selon la revendication 1, dans lequel il est prévu des moyens (25) agencés pour être reliés en coupure sur un circuit d'interface radio du téléphone portable (1).

3. Module selon l'une des revendications 1 et 2, dans lequel il est prévu une prise de service standard (30) pour montage gigogne.

4. Module selon l'une des revendications 1 à 3, dans lequel il est prévu un berceau 28, de réception du téléphone portable (1), conformé pour une coopération desmodromique avec le boîtier (2) du téléphone (1).

5. Module selon l'une des revendications 3 et 4, dans lequel il est prévu des moyens de déconnexion (31) agencés pour déconnecter une antenne (4) du téléphone portable (1) en cas de connexion d'une autre antenne dans la prise de service (30) dudit module (21).

6. Module selon l'une des revendications 1 à 5, dans lequel il est prévu des moyens (23) de chiffrement et de déchiffrement de données.

7. Module selon la revendication 6, dans lequel il est prévu des moyens (26, 27) d'adaptation de débit.

8. Ensemble comprenant un téléphone portable (1) et au moins un module fonctionnel (21) selon l'une des revendications 1 à 7.

9. Ensemble selon la revendication 8, dans lequel le module auxiliaire (21) reproduit, dans sa forme générale, la forme d'une partie (29) du boîtier standard (2) du téléphone (1).
